# EUROPEAN PATENT SPECIFICATION

(11) **EP 0 536 847 B1**
(45) Date of publication and mention of the grant of the patent: **15.05.1996**
(21) Application number: 92203100.0
(22) Date of filing: 08.10.1992
(51) Int. Cl.: B65G 21/20, B65G 47/19

(54) **Sealing apron device for the loading trough of a belt conveyor**
Dichtungsschürze für die Laderinne eines Bandförderers
Arrangement d'un rideau d'étanchéité pour la goulotte de chargement d'un convoyeur à bande

(30) Priority: 10.10.1991 NL 9103698
(43) Date of publication of application: 14.04.1993
(73) Proprietor: MASS FLOW EQUIPMENT B.V., NL-3941 DA Doorn (NL)
(72) Inventor: De Rooy, Johannes Jacobus, 3845 CX Cothen (NL)
(74) Representative: Morel, Christiaan F., Ir.Dr.

(56) References cited:
- EP-A- 0 369 605
- WO-A-91/13821
- GB-A- 2 208 838
- US-A- 4 236 628

## Description

The invention relates to a sealing apron device or conveyor skirt board for a moving conveyor belt or loading trough of a belt conveyor, provided with at least one mounting plate which is to be fitted above the belt and which bears a sealing apron in a vertically adjustable manner on a side wall of the mounting plate, the underside of which apron can interact with the belt for sealing, and which sealing apron is composed of a number of adjacent sections of which each apron section can be clamped to the mounting plate by means of a clamping member, friction means and fixing means in such a way that friction means permit a downward movement of the section relative to the mounting plate, but impede an upward movement thereof.

Such a sealing device is known from the European Patent Application EP-A-0 369 605. This known sealing apron device has however certain drawbacks. The apron sections are extremely broad, which makes that if the under-surface of an apron section is not uniformly worn out, so the contact of the apron skirt with the conveyer belt is not tide, the section ought to be changed although only little worn out. Another disadvantage is that each section can only be moved downward in steps. Furthermore each section is only clamped to the mounting plate near the lower side, what makes that the upper side of an apron section is not clamped against the mounting plate and when the sections are partly worn out the section will become not correctly clamped against the mounting plate and due to trembling easily the tension will change. Also some clamps does clamp two apron sections, what makes that when one apron section is changed due to the use of teeth the neighbouring apron section will not link correctly what causes that the apron will not seal correctly.

Another sealing apron device is known from the British Patent Specification GB 2,208,838.

The known sealing apron device has a sealing apron which is made up of a number of adjacent sections which are fixed so that they can slide in the vertical direction on a mounting plate. Each apron section is preferably slotted and individually bolted at a predetermined torque by bolt and nut assembly to the mounting plate. A disadvantage of this method of fixing is that the friction between a clamping plate and the corresponding skirt board section changes very sudden what makes it very difficult to fix each skirt board section with a predetermined torque to the mounting plate. Due to trembling the tension of the predetermined torque changes in time. Another disadvantage is that in order to be able to change the sections, they have to be moved in the vertical direction, i.e. upwards or downwards by means of a hammer. In the downward direction this causes the problem that the predetermined torque changes, while for the vertical movement of the apron sections in the upward direction the disadvantage is that the nut has to be loosened and then fixed to a predetermined torque. Removing the sections forwards, i.e. out of the vertical plane of the mounting plate, is very difficult, and for this three apron sections have to be loosened, due to the fact that the sections are interconnected to each other by tongues.

Such a sealing apron device is known from American Patent Specification US 4,236,628.

The known sealing apron device has a sealing apron which is made up of a number of adjacent sections which are fixed so that they can slide in the vertical direction on a mounting plate. Each apron section is preferably fixed by means of dovetail-type guides on the mounting plate. A disadvantage of this method of fixing is that, in order to be able to change the sections, they have to be moved in the vertical direction, i.e. upwards or downwards. In the downward direction this causes the problem that the conveyor belt is situated below the sections, while during the vertical movement of the apron sections in the upward direction the disadvantage is that a toothing is present which is for the very purpose of preventing the sections from being able to move upwards in the vertical direction. Removing the sections forwards, i.e. out of the vertical plane of the mounting plate, is very difficult, and for this an apron section has to be more or less broken out, which means that the apron section in question is more or less destroyed and the chance of damage to the remaining apron sections is very great. Another disadvantage is that, if the separate sealing apron sections are adjusted too far downwards, great wear occurs because the pressure of the apron sections on the conveyor belt becomes too great, because the sections cannot be set back up again since the toothing present prevents this. The only way of correcting this faulty setting is to break out the apron sections in the same way as during their replacement and to insert them into their guides again from the top. The chance of damaging the apron section in question and/or the sections lying next to them is very great here.

The object of the invention is a sealing apron device in which a number of apron sections are fixed on a mounting plate, and in which each apron section can be changed in a simple way independently of the other apron sections and if the adjustment is too deep, the faulty setting can easily be corrected.

This object of the invention is achieved with a device through the fact that the clamping member is a plate which in cross-section is U-shaped and with legs which extend on either side, and can be accommodated in grooves provided on either side of a longitudinal hole in each apron section, and in that the two legs of the U-shaped plate and/or the grooves in an apron section are provided with friction means. The advantage of such a method of composing a sealing apron device is that the clamping plate can be removed in a simple manner, following which the apron section can be removed very easily between the other apron sections. A new apron section can then be fixed in a simple manner on the vacant position, and the new apron section is then fixed tightly on the mounting plate with the aid of the same clamping means. These measures also ensure that the apron sections cannot make an upward movement, which would cause the seal of the sealing apron device to be inadequate.

It has been found that such a clamping plate holds the apron section very well in a tight fit in the correct position, which prevents the apron sections from being able to turn and any cracks from being able to occur between the different apron sections. Such a U-shaped clamping plate can also be provided very simply with friction means consisting of teeth which are directed in such a way that they permit only a downward movement of the section relative to the mounting plate. Such preferred embodiments make it possible to release a clamping plate fully or partially by undoing the fixing means, with the result that the sealing apron section clamped under it is then also adjustable in the upward direction, because the pressure of the friction elements is removed through the release. This is very useful if, for example, an apron section has been moved too far down, so that too great pressure is being exerted on the conveyor belt.

Making each apron section of the sealing apron device preferably symmetrical both in the longitudinal direction and in the transverse direction means that when one end of such an apron section is worn out it can be turned over and the other end can be used. An apron section is consequently used more efficiently, for the centre part, which is no longer of any use after the apron section is worn out, now lasts twice as long.

In another preferred embodiment of the device, the mounting plate is flanged in the lengthwise direction near the underside, and each apron section is provided with a recess near the underside, so that it can interact with the raised edge of the mounting plate. Such an edge not only strengthens the mounting plate, but also prevents the apron sections from being worn more than is efficient, otherwise the sealing of the apron sections will no longer be adequate. This flanged edge also prevents the accumulation of material between the apron sections and the mounting plate.

The distance between the U-shaped legs of the clamping plate is preferably at least half the width of an apron section, which means that the different apron sections can be fixed well so that they are flat and sturdy. In a preferred embodiment the mounting plate can, if desired, be provided with several guide strips which can interact with several recesses in an apron section, which means that each apron section can be moved only in the vertical direction, and twisting of an apron section can no longer occur at all.

The invention will be explained in greater detail with reference to the drawing. In the drawing:
Figure 1 shows a part of a loading trough with loading trough hopper and a sealing apron device according to the invention;
Figure 2 shows a mounting plate with apron section and fixing means according to the invention;
Figure 3 shows a mounting plate with a number of loose parts of an apron section;
Figures 4, 5, 6 show a view and cross-section of another embodiment of an apron section.

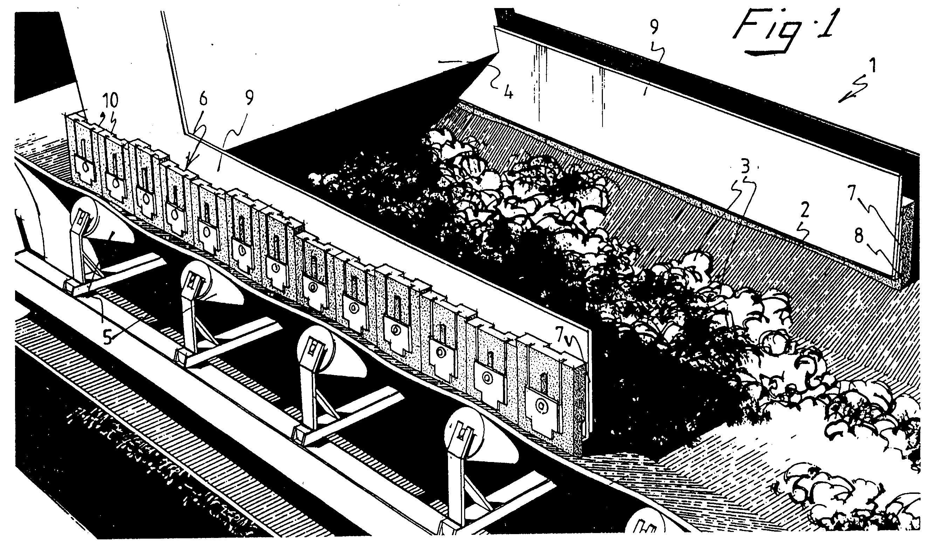

Figure 1 shows a belt conveyor 1 with a moving conveyor belt or loading trough 2 on which the materials 3 to be conveyed are deposited through a chute 4, and are conveyed from there, the conveyor belt 2 being supported by a number of rollers 5. A U-shaped sealing apron device 6 according to the invention is fitted near the position where the chute 4 deposits the materials 3 on the moving belt 2. The sealing apron device 6 comprises a mounting plate 7 consisting of a rigid flat metal plate of which the underside is flanged, thereby forming a flange 8. The device shown in Figure 1 comprises a mounting plate 7 which is in this case welded to the plates 9 forming the end of the chute 4.

Figure 2 shows another embodiment of the mounting plate 7 together with a vertically movable apron section 10 of the sealing apron device. In this case the mounting plate 7 is flanged both at the underside, producing a flange 8 at the underside, and at the top, forming a flange 11. A number of guide strips 12 are fitted, for example welded, at equal intervals on the mounting plate 7, on which strips a spacer 13 provided with a threaded hole 14 is fitted. With the aid of a U-shaped clamping bracket 15, a sealing apron section 10 can be fixed in the correct position on the mounting plate 7 by means of a bolt 16. The distance between the guide strips 12 with spacer 13 corresponds exactly to the width of a sealing apron section 10.

Figure 3 shows the various parts before they are fixed on the mounting plate. The sealing apron section 10 is made of rubber, polyurethane or another soft material. The guide strips 12 are preferably made of steel, but they can also be made of other materials, for example of a smooth plastic, in order to obtain a lower friction. When steel guide strips are used, they are preferably welded onto the mounting plate, and when plastic or other materials are used, screws or pop rivets can, for example, be used for the fixing. The sealing apron sections 10 are provided with two grooves 17 into which the legs 18 of the U-shaped clamping bracket 15 fit. The legs 18 of the clamping bracket 15 are provided with one or more sawteeth 19 which are directed in one direction, with the result that the sealing apron section 10 can be hammered only downwards with a hammer, while the sawteeth 19 at the same time prevent an upward movement of the sealing apron section. The sealing apron sections 10 are also provided with an elongated aperture or longitudinal hole 20 through which said section can move over the spacer 13 in the vertical direction. At the rear side each sealing apron section is provided with a space 21 having on either side projecting parts 22, said space 21 being exactly the same width as the guide strips 12. The projecting parts 22 do not run entirely to the bottom, with the result that when the sealing apron sections are fixed on the mounting plate 7 they can be moved in the vertical direction only until the projecting parts 22 come against the flanged edge 8 of the mounting plate 7. The movement distance of each sealing apron section is also determined by the elongated aperture 20.

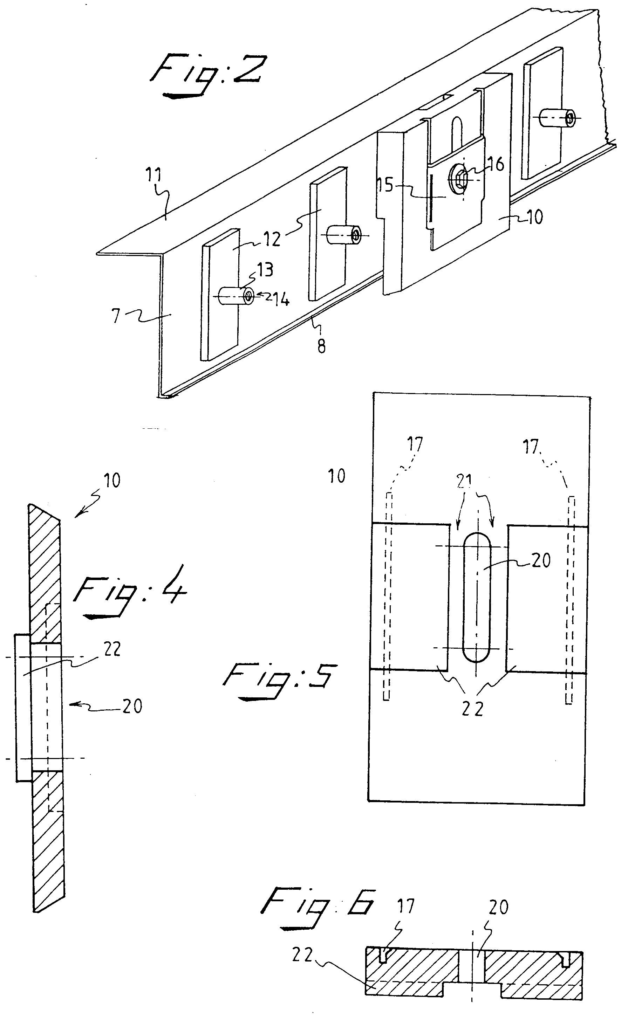

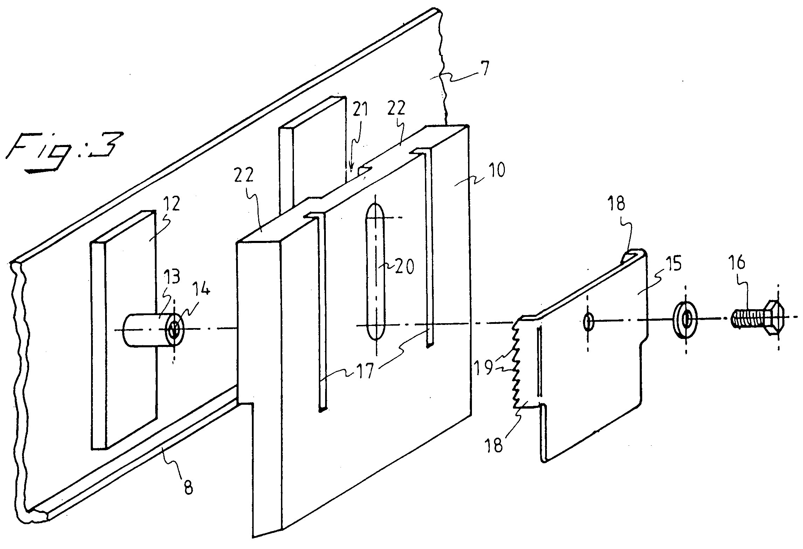

Figures 4, 5 and 6 show another example of an embodiment of a sealing apron section 10, which in this case comprises a sealing apron section which is symmetrical both in the lengthwise direction and in the transverse direction, which means that both sides of the sealing apron sections can be used.

## Claims

1. Sealing apron device for a moving conveyor belt or loading trough (2) of a belt conveyor (1), provided with at least one mounting plate (7) which is to be fitted above the belt and which bears a sealing apron in a vertically adjustable manner on a side wall of the mounting plate, the underside of which apron can interact with the belt for sealing, and which sealing apron is composed of a number of adjacent sections (10) of which each apron section (10) can be clamped to the mounting plate (7) by means of a clamping member (15), friction means (17, 18, 19) and fixing means (13, 16) in such a way that friction means permit a downward movement of the section (10) relative to the mounting plate (7), but impede an upward movement thereof, **characterised in that** the clamping member is a plate (15) which in cross-section is U-shaped and with legs (18) which extend on either side, and can be accommodated in grooves (17) of said apron section (10) provided on either side of a longitudinal hole (20) in each apron section (10), and in that the two legs (18) of the U-shaped plate (15) and/or the grooves (17) in an apron section (10) are provided with said friction means.

2. Sealing apron device according to Claim 1, **characterised in that** the friction means comprise teeth (19) on the ends of the legs (18) of said clamping plate (15), which teeth are directed in such a way that they permit only a downward movement of the section (10) relative to the mounting plate (7).

3. Sealing apron device according to Claim 1 or 2, **characterised in that** the distance between the U-shaped legs (18) of the clamping plate is at least half the width of said apron section.

## Patentansprüche

1. Dichtungsschürze für ein sich bewegendes Förderband oder eine Laderinne (2) eines Bandförderes (1), mit zumindest einer Halteplatte (7), die oberhalb des Bandes angebracht wird und in vertikal einstellbarer Weise eine Dichtungsschürze auf einer Seitenwandung der Halteplatte trägt, wobei die Unterseite der Schürze mit dem Band zum Zwecke des Abdichtens zusammenwirkt, wobei weiter die Dichtungsschürze aus mehreren aneinanderliegenden Abschnitten (10) besteht, und wobei jeder der Schürzenabschnitte (10) an der Halteplatte (7) mit Klemmteilen (15), Reibmitteln (17, 18, 19) und Befestigungsmitteln (13, 16) in der Art und Weise festgeklemmt werden kann, daß die Reibmittel eine nach unten gerichtete Bewegung des Abschnittes (10) relativ zu der Halteplatte (7) erlauben, jedoch eine nach oben gerichtete Bewegung derselben verhindern, **dadurch gekennzeichnet,** daß das Klemmteil eine Platte (15) ist, die im Querschnitt U-förmig und mit Schenkel (18) versehen ist, die sich auf jeder Seite erstrecken und in Nuten (17) des Schürzenabschnittes (10) eingesetzt werden können, die auf jeder Seite einer länglichen Bohrung (20) in dem Schürzenabschnitt (10) vorgesehen sind, und daß die zwei Schenkel (18) der U-förmigen Platte (15) und/oder die Nuten (17) in dem Schürzenabschnitt (10) mit den Reibmitteln versehen sind.

2. Dichtungsschürze nach Anspruch 1, dadurch gekennzeichnet, daß die Reibmittel Zähne (19) an den Enden der Schenkel (18) der Klemmplatte (15) aufweisen, wobei die Zähne so gerichtet sind, daß sie nur eine nach unten gerichtete Bewegung des Abschnittes (10) relativ zu der Halteplatte (7) erlauben.

3. Dichtungsschürze nach Anspruch 1 oder 2, dadurch gekennzeichnet, daß der Abstand zwischen den U-förmigen Schenkein (18) der Klemmplatte mindestens die Hälfte der Breite der Dichtungsschürze beträgt.

## Revendications

1. Dispositif de tablier d'étanchéité, pour bande de convoyeur mobile ou auge de chargement (2) d'un convoyeur à bande (1), comprenant au moins une plaque de montage (7) qui doit être adaptée au-dessus de la bande et qui porte un tablier d'étanchéité de manière que sa position soit réglable verticalement sur une paroi latérale de la plaque de montage, le côté inférieur du tablier pouvant coopérer avec la bande en vue d'assurer l'étanchéité, le tablier d'étanchéité étant composé d'un certain nombre de sections (10) juxtaposées, chaque section de tablier (10) pouvant être serrée sur la plaque de montage (7) au moyen d'un élément de serrage (15), de moyens de friction (17, 18, 19) et de moyens de fixation (13, 16) d'une manière telle que les moyens de friction permettent un déplacement de la section (10) vers le bas vis-à-vis de la plaque de montage (7), mais empêchent un déplacement de cette section vers le haut, caractérisé en ce que l'élément de serrage est une plaque (15) qui a une forme en U en section transversale et comporte des ailes (18) qui s'étendent sur l'un et l'autre côtés et qui peuvent se loger dans des rainures (17) de la section de tablier (10) qui sont prévues d'un côté et de l'autre d'un trou longitudinal (20) ménagé dans chaque section de tablier (10) et en ce que les deux ailes (18) de la plaque en U (15) et/ou les rainures (17) de la section de tablier (10) sont pourvues desdits moyens de friction.

2. Dispositif de tablier d'étanchéité selon la revendication 1, caractérisé en ce que les moyens de friction sont constitués par des dents (19) situées sur les extrémités des ailes (18) de la plaque de serrage (15), lesquels dents sont orientées d'une manière telle qu'elles ne permettent qu'un déplacement de la section (10) vers le bas vis-à-vis de la plaque de montage (7).

3. Dispositif de tablier d'étanchéité selon la revendication 1 ou 2, caractérisé en ce que la distance entre les ailes en U (18) de la plaque de serrage est égale au moins à la moitié de la largeur de la section de tablier.
